## Europäisches Patentamt
## European Patent Office
## Office européen des brevets

(11) Publication number: **0 097 210**
**B1**

(12) **EUROPEAN PATENT SPECIFICATION**

(45) Date of publication of patent specification: **11.03.87**

(21) Application number: **82303288.3**

(22) Date of filing: **23.06.82**

(51) Int. Cl.⁴: **F 16 D 25/14**

(54) **Hydraulic actuator arrangement.**

(43) Date of publication of application:
**04.01.84 Bulletin 84/01**

(45) Publication of the grant of the patent:
**11.03.87 Bulletin 87/11**

(84) Designated Contracting States:
**AT BE CH DE FR GB IT LI NL SE**

(56) References cited:
**GB-A-1 191 429**
**GB-A-1 235 273**
**GB-A-1 315 721**
**US-A-2 722 296**

(73) Proprietor: **DEERE & COMPANY**
**1 John Deere Road**
**Moline Illinois 61265 (US)**

(72) Inventor: **Hille, Hans-Jörg**
**Stickelpfad 7**
**D-6701 Otterstadt (DE)**
Inventor: **Halabiya, Sabah**
**Rotkehlchenweg 9**
**D-6803 Edingen (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a hydraulic actuator arrangement comprising a clutch, a hydraulic actuator for the clutch a source of hydraulic fluid under pressure, a control valve for controlling the application of fluid from the source to the actuator, and a pressure-controlled variable throttle valve in series with the control valve, the throttle valve being responsive to the pressure on the downstream side thereof to increase its throttling action as the said pressure increases, wherein the control valve is a two-way changeover valve having a first position in which the hydraulic source is connected via the throttle valve to the clutch actuator and a second position in which the hydraulic source is connected to a second hydraulic device.

Arrangements of the kind defined above may be used, for example, to operate the PTO shafts of tractors. The type of clutch commonly employed is a multiple plate clutch. The actuator commonly comprises an annular piston of substantial working area capable of applying adequate engaging pressure to the clutch from a low pressure hydraulic source. In known tractors the hydraulic source is commonly a gear pump which supplies plurality of low pressure functions, some directly and others, including the clutch actuator, by way of a pressure regulating valve. This pump also supplies the transmission lubrication system. The pump has to be of substantial capacity to be sure of supplying all functions without loss of adequate pressure. In any event the pump has to be capable of supplying hydraulic fluid at a substantial rate in order to fill hydraulic lines rapidly and take up the free movement of the annular piston in the actuator. The free movement arises from normal tolerances and also because the plates of the clutch are spring biased to separate completely each time the clutch is disengaged in order to ensure adequate cooling by ventilation of the plates. If the low pressure pump did not have sufficient capacity, there would be a noticeable and unacceptable delay in engaging the clutch.

On the other hand, once the plates come into initial engagement it requires only a very small further movement of the piston to build up full engaging pressure and the pressure rise is very rapid. In consequence the clutch tends to snatch into rapid engagement with consequent torque shocks which are damaging and potentially dangerous to the PTO shaft itself and the driven implement in the case of a tractor PTO drive.

For this reason it is known (GB—A—1 315 721) to use a variable throttle valve to control the build up of pressure in a smooth manner so that the clutch does not snatch. Moreover, GB—A—1 315 721 discloses an arrangement with two clutches and corresponding variable throttle valves and a two-way changeover control valve for selecting which clutch is pressurised and thereby engaged.

The object of the present invention is to provide a simple arrangement which makes it possible to combine snatch-free clutch engagement with rapid braking of the driven part when the clutch is disengaged.

The invention is characterised in that, in the second position, the hydraulic source is connected directly to a hydraulic brake which brakes the clutch driven part.

The effect of the throttle valve is to allow substantially unimpeded flow while the downstream pressure remains low, i.e. until initial clutch engagement occurs, and then to throttle the flow as the pressure builds up and thereby limit the rate at which the build up occurs and ensure smooth, snatch-free engagement of the clutch. It is a matter of simple experiment to determine the required throttling cross-section to achieve an appropriately limited flow rate and, once this has been correctly established, the throttle valve will perform its function automatically without any need for adjustments, even although the mechanical tolerances involved will change during the life of the clutch.

In the second position of the valve the hydraulic source is connected directly to the hydraulic brake which brakes the driven part, e.g. the PTO shaft, without being influenced by the throttle valve.

The invention will be described in more detail, by way of example, with reference to the accompanying drawings, in which:

Fig. 1 is a hydraulic circuit diagram for a tractor with a PTO shaft and embodying an arrangement according to the invention, the arrangement being shown with the clutch disengaged,

Fig. 2 shows part of Fig. 1 when the clutch is engaged,

Fig. 3 is a sectional view of the PTO shaft with its clutch and brake and of the throttle valve when the clutch is disengaged, and

Fig. 4 is a similar view with the clutch engaged.

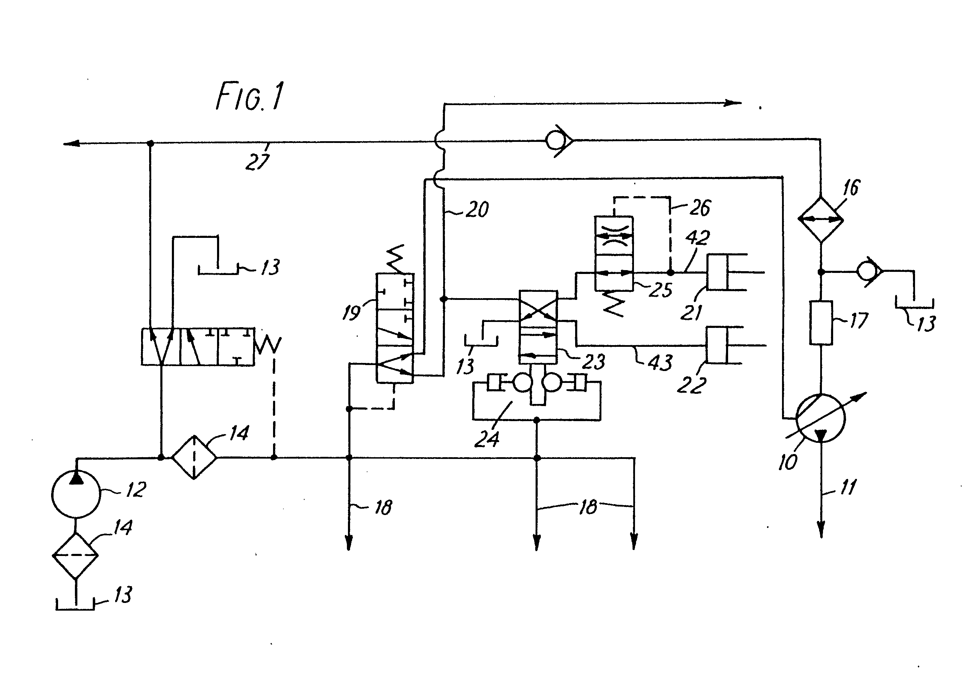

Insofar as the circuit of Fig. 1 is largely known, it will be described very briefly. The nature of the circuit is apparent from the standard symbols employed. The elements of the circuit comprise the main, high pressure pump 10 feeding high pressure functions by way of a line 11, a low pressure, gear pump 12, a sump indicated at various locations by the reference numeral 13, filters 14, a reservoir 17 and an oil cooler 16. The pump 12 feeds various unregulated low pressure functions by way of lines 18 and feeds low pressure regulated functions by way of a pressure regulating valve 19 and a line 20. The low pressure functions fed by the line 20 include a PTO clutch actuator 21 and a PTO brake actuator 22. These actuators are controlled by a two way, manually operable, change over valve 23 provided with a known pressure actuated detent mechanism 24 ensuring that the valve automatically assumes the position illustrated in Fig. 1 when the pressure in the lines 18 falls below a predetermined value. Line 27 feeds the transmission lubrication.

In the position illustrated in Fig. 1 the control valve 23 connects the line 20 to the brake actuator 22 and vents the clutch actuator 21 to the sump 13. In between the control valve 23 and the clutch actuator 21 there is provided a pressure responsive, variable throttle valve 25 which, again in the position of Fig. 1, provides a substantially unimpeded flow path.

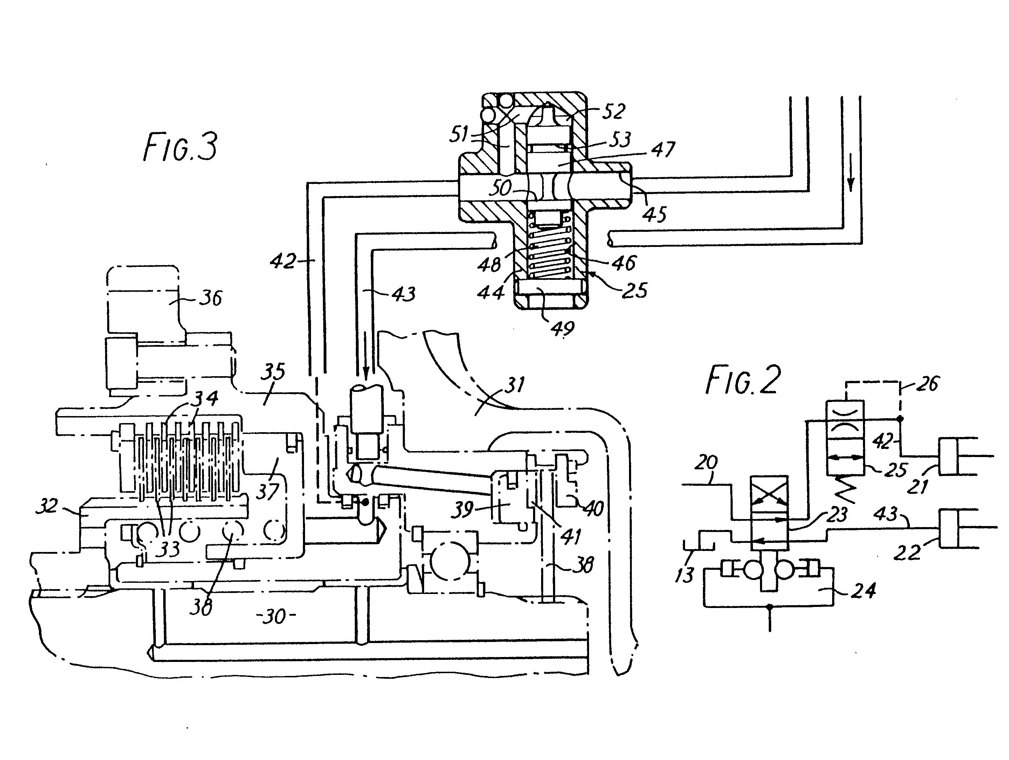

When the control valve is changed over to the position shown in Fig. 2 it connects the line 20 through the throttle valve 25 to the clutch actuator 21 and vents the brake actuator 22 to the sump 13. When the valve 23 is initially changed over, there is rapid flow of hydraulic fluid from the line 20 without significant build up of pressure and the valve 25 remains in the position illustrated in Fig. 1 so that the piston of the clutch actuator 21 is moved rapidly to the point at which the clutch plates just engage. Thereafter the pressure builds up and the throttle valve 25 responds to the pressure on its downstream side, as indicated by the connection 26, to change over to the position illustrated in Fig. 2 in which this valve throttles the flow appreciably. Accordingly, further build up of pressure is limited to an acceptable rate such that the clutch engages smoothly without snatch.

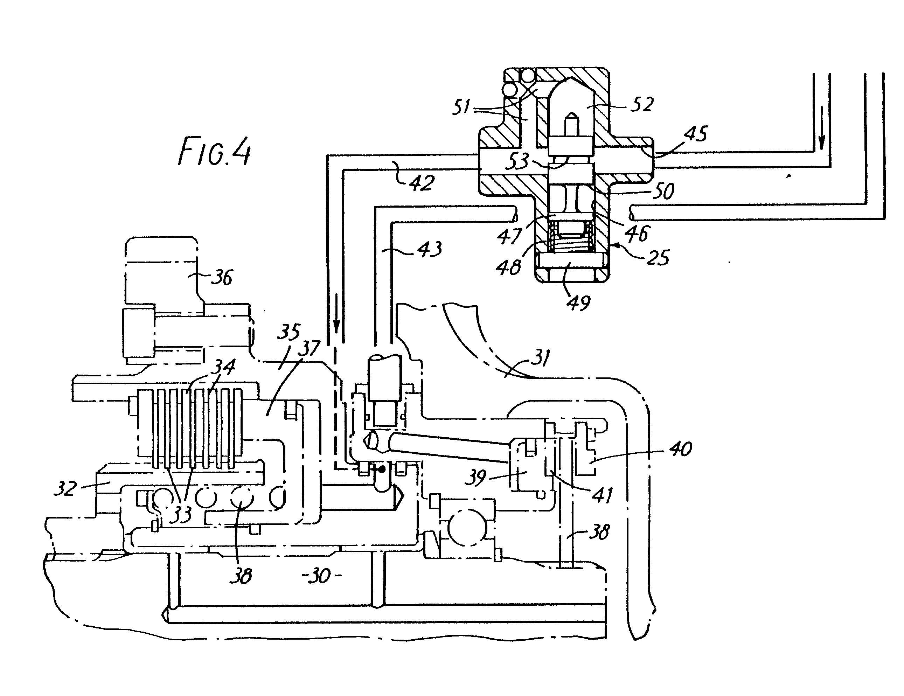

Figs. 3 and 4 illustrate one constructional form. The PTO shaft 30 of a tractor is journalled in a fixed housing 31. A clutch comprises a carrier 32 keyed onto the shaft and having a set of first plates 33 splined thereon so as to rotate with the shaft but be axially shiftable. The plates 33 alternate with second plates 34 which are splined within a driving carrier 35 which is rotated by the tractor engine via a ring gear 36. The clutch actuator 21 of Figs. 1 and 2 is constituted by an annular piston 37 slidably disposed within the driving part 36 and biased to the disengaged position shown in Fig. 3 by a helical compression spring 38.

A brake for the PTO shaft 30 comprises a brake disc 38 splined onto the shaft. The brake actuator 22 of Figs. 1 and 2 is constituted by another annular piston 39 disposed within the housing 31. When pressure is applied to this piston, the disc 38 is clamped between pads 40 fixed in the housing and pads 41 on the piston.

The hydraulic lines leading to the clutch actuator and the brake actuator are referenced 42 and 43 respectively in all of the drawings. The line 42 has the throttle valve 25 fitted therein and this valve comprises a body 44 with a large through bore 45 for the flow of hydraulic fluid. The bore 45 is intersected by a transverse bore 46 in which is disposed a spool 47 and a helical compression spring 48 retained by a pin 49 and urging the spool 47 to the position illustrated in Fig. 3. In this position a large groove 50 in the spool registers with the flow passages 45 and the condition of Fig. 1 is thereby established with substantially no impediment to flow through the valve 25.

The control line 26 of Figs. 1 and 2 is provided by intersecting bores 51 which connect the passage 45 on the downstream side of the spool 47 to a chamber 52 at the closed end of the bore 46. The pressure in this chamber acts on the end of the spool opposite the spring 48. As the pressure builds up, the spool is forced against the action of the spring 48 from the position shown in Fig. 3 into the position shown in Fig. 4. In this latter position, the spool imposes a significant throttling action because only a narrow groove 53 in the spool now registers with the flow passage 45.

The situation in Fig. 3 corresponds to Fig. 1 with pressure applied via the line 43 to the brake piston 39, whereby the PTO shaft 30 is arrested by the brake. The line 42 to the clutch piston 37 is vented by way of the unobstructed flow passage 45 in the valve 25.

The situation illustrated in Fig. 4 corresponds to Fig. 2 with pressure applied in the line 42 to urge the piston 37 to the left in the drawing, thereby compressing the interleaved clutch plates 33 and 34 and imparting drive to the PTO shaft 30. The brake piston 39 is vented to the sump by way of the line 43.

## Claims

1. A hydraulic actuator arrangement comprising a clutch (33, 34), a hydraulic actuator (37) for the clutch, a source (12) of hydraulic fluid under pressure, a control valve (23) for controlling the application of fluid from the source to the actuator, and a pressure-controlled variable throttle valve (25) in series with the control valve (23), the throttle valve being responsive to the pressure on the downstream side thereof to increase its throttling action as the said pressure increase, wherein the control valve (23) is a two-way changeover valve having a first position in which the hydraulic source (12) is connected via the throttle valve (25) to the clutch actuator (21) and a second position in which the hydraulic source is connected to a second hydraulic device, characterised in that, in the second position, the hydraulic source (12) is connected directly to a hydraulic brake (22) which brakes the clutch driven part (32, 30).

2. An arrangement according to claim 1, characterised in that the throttle valve (25) comprises a body (44) with a through bore (45) for the flow of fluid from the hydraulic source (12) to the actuator (21, 37), and with a spool (47) in an intersecting bore (46), the spool being spring biased (48) at one end and acted on at the other end by the pressure in a chamber (52) at the end of the intersecting bore, connected (51) to the through bore (45) downstream of the spool.

3. An arrangement according to claim 2, characterised in that the spool (47) has a large groove (50) in register with the through bore (45) in a first end position to which it is biased by the spring (48) and a small groove (53) in register with the through bore (45) in a second end position to which it is urged by the pressure in the said chamber (52).

## Patentansprüche

1. Hydraulische Betätigungsanordnung mit einer Kupplung (33, 34), einer hydraulischen Betätigungsvorrichtung (21, 37) für die Kupplung, einer Quelle (12) für unter Druck stehendes hydraulisches Fluid, einem Steuerventil (23) zur Steuerung der Anlegung des Druckes von der Quelle an die Betätigungsvorrichtung und mit einem druckgesteuert veränderbaren Drosselventil (25), das in Reihe mit dem Steuerventil (23) angeordnet ist und auf den Druck auf der stromabwärts liegenden Seite des Steuerventils anspricht, um seine Drosselwirkung zu vergrössern, wenn der Druck zunimmt, bei der das Steuerventil (23) ein Zwei-Wege Wechselventil ist, das eine erste Stellung aufweist, in der die hydraulische Quelle (12) über das Drosselventil (25) mit der Kupplungsbetätigungsvorrichtung (21, 37) verbunden ist, und eine zweite Stellung, in der die hydraulische Quelle mit einer zweiten hydraulischen Vorrichtung verbunden ist, dadurch gekennzeichnet, daß in der zweiten Stellung die hydraulische Quelle (12) direkt mit einer hydraulischen Bremse (22) verbunden ist, welche den über die Kupplung getriebenen Teil (32, 30) abbremst.

2. Anordnung nach Anspruch 1, dadurch gekennzeichnet, daß das Drosselventil (25) einen Körper (44) mit einer durchgehenden Bohrung (45) für die Strömung des Fluids von der hydraulischen Quelle (12) zu der Betätigungsvorrichtung (21, 37) aufweist, und mit einem Schieber (47) in einer die Bohrung (45) schneidenden Bohrung (46), wobei der Schieber durch Feder (48) an einem Ende vorgespannt ist und am anderen Ende durch den Druck in einer Kammer (52) an dem Ende der schneidenden Bohrung beaufschlagt wird, das mit der Durchgangsbohrung (45) stromab von dem Schieber verbunden (51) ist.

3. Anordnung nach Anspruch 2, dadurch gekennzeichnet, daß der Schieber (47) eine breite Nut (50) in Fluchtung mit der Durchgangsbohrung (45) in einer ersten Endstellung aufweist, in die er durch die Feder (48) vorgespannt ist, und eine schmale Nut (53) in Fluchtung mit der Durchgangsbohrung (45) in einer zweiten Endstellung, in die er durch den Druck in der genannten Kammer (52) gedrängt wird.

**Revendications**

1. Mécanisme de commande hydraulique comprenant un embrayage (33, 34), un actionneur hydraulique (37) pour l'embrayage, une source (12) de fluide hydraulique sous pression, une valve de commande (23) pour déterminer l'application de fluide de la source à l'actionneur, et une soupape d'étranglement variable (25) à commande par pression, placée en série avec la valve de commande (23), la soupape d'étranglement étant sensible à la pression sur son côté aval de manière à accroître son action d'étranglement lorsque la dite pression augmente, dans lequel la valve de commande (23) est une valve de permutation à deux voies comportant une première position, dans laquelle la source hydraulique (12) est reliée à l'actionneur d'embrayage (21) par l'intermédiaire de la soupape d'étranglement (25), et une deuxième position dans laquelle la source hydraulique est reliée à un deuxième dispositif hydraulique, caractérisé en ce que, dans la deuxième position, la source hydraulique (12) est reliée directement à un frein hydraulique (22) qui freine la partie entraînée de l'embrayage (32, 30).

2. Mécanisme suivant la revendication 1, caractérisé en ce que la soupape d'étranglement (25) comprend un corps (44) comportant un alésage traversant (45), pour l'écoulement de fluide de la source hydraulique (12) à l'actionneur (21, 37), et un tiroir (47) placé dans un alésage en intersection (46), le tiroir étant poussé élastiquement (48) à une extrémité et étant soumis à l'autre extrémité à la pression dans une chambre (52) définie à l'extrémité de l'alésage en intersection, cette chambre étant reliée (51) à l'alésage traversant (45) à l'aval du tiroir.

3. Mécanisme suivant la revendication 2, caractérisé en ce que le tiroir (47) comporte une grande gorge (50) alignée avec l'alésage traversant (45) dans une première position d'extrémité, à laquelle le tiroir est rappelé par le ressort (48), et une petite gorge (53) alignée avec l'alésage traversant (45) dans une deuxième position d'extrémité à laquelle le tiroir est poussé par la pression dans ladite chambre (52).

FIG.1

*FIG.3*

*FIG.2*

0 097 210

FIG.4